# EUROPÄISCHE PATENTANMELDUNG

(11) **EP 2 921 512 A1**
(43) Veröffentlichungstag der Anmeldung: **23.09.2015**
(21) Anmeldenummer: 14160872.9
(22) Anmeldetag: 20.03.2014
(51) Int. Cl.: C08G 18/48, C08G 18/66, C08G 18/67, C08G 18/75, C08G 18/08, C09D 175/16, C08G 18/32

(54) **Lackzusammensetzung in Form einer nicht wässrigen transparenten Dispersion**

(71) Anmelder: Dritte Patentportfolio Beteiligungsgesellschaft mbH & Co. KG, 12529 Schoenefeld (DE)
(72) Erfinder: Siebertz, Kirsten, 61130 Nidderau (DE); Koch, Klaus-Uwe, 45659 Recklinghausen (DE); Prieto, Jorge, 48308 Senden (DE)
(74) Vertreter: Held, Stephan

(57) **Zusammenfassung**

Die vorliegende Erfindung betrifft eine Lackzusammensetzung in Form einer nichtwässrigen transparenten Dispersion, umfassend einen Reaktivverdünner, Polyurethan(meth)acrylatpartikel, die dadurch erhältlich sind, dass man ein Polyisocyanat mit einem Polyol und einem nukleophil funktionalisierten (Meth)acrylsäureester in dem Reaktivverdünner zu Polyurethan(meth)acrylat-partikeln mit einem mittleren Durchmesser von weniger als 40 nm umsetzt, und einem Initiator. Entsprechende Lackzusammensetzungen zeichnen sich nach der Aushärtung durch besonders günstige Eigenschaften insbesondere in Bezug auf ihre Haftfestigkeit, Härte und Beständigkeit gegen Mikrokratzer aus und sind damit in vielen Fällen konventionell verfügbaren Lackprodukten ohne nanopartikuläre Polyurethan(meth)acrylatpartikel überlegen.

## Beschreibung

Die Erfindung betrifft Lackzusammensetzungen in Form von nicht wässrigen transparenten Dispersionen, die einen Reaktivverdünner, Polyurethan(meth)-acrylatpartikel, die durch Umsetzung eines Polyisocyanats mit einem Polyol und einem nukleophil funktionalisierten (Meth)acrylsäureester im Reaktivverdünner erhältlich sind und einen mittleren Durchmesser von weniger als 40 nm aufweisen, sowie einem Initiator enthalten.

Nicht wässrige Polyurethandispersionen haben in den vergangenen Jahren an Bedeutung gewonnen. Sie werden unter anderem als Beschichtungs-, Haft- und Klebemittel eingesetzt.

Die Schriften DE 32 48 132, DE 35 13 248, EP 0 320 690 und EP 0 318 939 beschreiben nicht wässrige Dispersionen von Polyurethanen zur vorwiegenden Verwendung als Beschichtungsmittel. Das Lösungsmittel besteht aus einem Kohlenwasserstoff. Die Aushärtung erfolgt durch Verdunsten des Lösungsmittels, wodurch sich eine dünne Schicht aus den zuvor dispergierten Polyurethanpartikeln bildet. Die Dispersion aus DE 32 48 132 wird als lichtundurchlässig (opak) beschrieben.

In der DE 10 2005 035 235 A1 sind nicht wässrige transparente Dispersionen von Polyurethan(meth)acrylatpartikeln in einem Reaktivverdünner beschrieben, die dadurch erhältlich sind, dass man ein Polyisocyanat mit mindestens einem Polyol und einem nukleophil funktionalisierten (Meth)acrylsäureester in dem Reaktivverdünner umsetzt und die dadurch gekennzeichnet sind, dass die Polyurethan-(meth)acrylatpartikel einen mittleren Durchmesser von weniger als 40 nm aufweisen. Die DE 10 2005 035 235 A1 beschreibt entsprechende Zusammensetzungen zur Verwendung als Klebesysteme und Gießmassen und gibt an, dass die zum Festkörper ausgehärteten Dispersionen hervorragende Schlagzähigkeitseigenschaften und eine hohe Zugscherfestigkeit aufweisen.

Die in dieser Anmeldung beschriebenen Zusammensetzungen weisen jedoch speziell für Lackanwendungen ungenügende Eigenschaften auf, wie unter anderem eine ungünstige Viskosität. Es existiert demzufolge ein Bedürfnis nach Zusammensetzungen für Lackanwendungen, die nach der Aushärtung vollständig transparent sind und gleichzeitig in Bezug auf ihre Anwendungseigenschaften, speziell ihre Haftfestigkeit, ihre Härte und ihre Beständigkeit gegen Mikrokratzer, ein verbessertes Eigenschaftsprofil aufweisen. Diese Eigenschaften sind insbesondere bei der Verwendung der Zusammensetzungen als Lack von Bedeutung, da Lacke einerseits möglichst transparent sein sollten, andererseits jedoch das darunter liegende Substrat oder Produkt von äußeren Einflüssen gut abschirmen und schützen sollen, damit es durch alltägliche Beanspruchung nicht beschädigt wird.

In Anbetracht des Standes der Technik war es Aufgabe der vorliegenden Erfindung, Lackzusammensetzungen auf Basis von Polyurethandispersionen anzugeben, welche gegenüber dem Stand der Technik verbesserte Eigenschaften aufweisen und neben einer hohen Transparenz nach der Härtung eine günstige Haftfestigkeit, Härte und Beständigkeit gegenüber Mikrokratzern aufweisen. Eine weitere Aufgabe war die Bereitstellung einer Dispersion, die aus möglichst wenigen Komponenten erhältlich ist, um die Herstellung entsprechender Dispersionen zu vereinfachen. Zudem sollte die Herstellung der erfindungsgemäßen Dispersion möglichst mit Komponenten erfolgen, die leicht und preisgünstig erhältlich sind.

Die zuvor beschriebenen Aufgaben sowie weitere, die zwar nicht wörtlich genannt werden, sich aber aus den hierin diskutierten Zusammenhängen ableiten lassen und sich aus diesen zwangsläufig ergeben, werden mit einer Lackzusammensetzung in Form einer nicht wässrigen transparenten Dispersion gelöst, die Folgendes umfasst:
- einen Reaktivverdünner
- Polyurethan(meth) acrylatpartikel, die dadurch erhältlich sind, dass man mindestens ein Polyisocyanat mit mindestens einem Polyol und mindestens einem nukleophil funktionalisierten (Meth)acrylsäureester in dem Reaktivverdünner zu Polyurethan(meth)acrylatpartikeln mit einem mittleren Durchmesser von weniger als 40 nm umsetzt, und
- einen Initiator.

Bereitgestellt wird durch die vorliegende Erfindung demzufolge eine Lackzusammensetzung in Form einer nicht wässrigen transparenten Dispersion, die einerseits mit Methacrylsäureestern funktionalisierte Polyurethan(meth)acrylatpartikel und andererseits einen Reaktivverdünner sowie einen Initiator enthält, mit denen es möglich ist, die funktionalisierten Polyurethan(meth)acrylatpartikel bei der Polymerisation des Reaktivverdünners kovalent in die Matrix des Reaktivverdünners einzubinden. Ein Vorteil derartiger Lackzusammensetzungen besteht darin, dass sie transparent sind und auch nach Aushärtung des Reaktivverdünners transparent bleiben.

Die erfindungsgemäße Lackzusammensetzung kann direkt als Lack verwendet werden, es ist jedoch auch möglich, der Zusammensetzung weitere in Lacken übliche Additive und Zusatzstoffe beizumischen, oder die Zusammensetzung mit kommerziell erhältlichen Lackzusammensetzungen zu mischen und die daraus erhaltene Formulierung als Lack zu verwenden.

Der erfindungsgemäße Lack besitzt in Form der ausgehärteten Dispersion, vermittelt durch die enthaltenen Polyurethan(meth)acrylatpartikel, eine hervorragende Haftfestigkeit auf verschiedenen Untergründen, eine ausgezeichnete Härte sowie gute Beständigkeiten gegen Mikroverkratzungen.

Ein weiterer Vorteil der beschriebenen Dispersionen ist es, dass sie über längere Zeit, d.h., mindestens zwei Monate, bei Raumtemperatur stabil und daher lagerungsfähig sind.

Der Begriff "nukleophil funktionalisierter (Meth)acrylsäureester" bezeichnet im Rahmen dieser Erfindung einen (Meth)acrylsäureester, der in seinem vom Alkohol herrührenden Rest eine nukleophile funktionale Gruppe trägt, die sich mit freien Isocyanatgruppen umsetzt. Bevorzugte nukleophile Gruppen sind Hydroxy-, Amino- und Mercaptogruppen. Besonders bevorzugt ist eine Hydroxygruppe. Die besonders bevorzugten nukleophil funktionalisierten (Meth)acrylsäureester mit einer Hydroxyfunktionalität werden als "hydroxyfunktionale (Meth)acrylsäureester" bezeichnet.

Der Begriff "Polyurethan(meth)acrylat" bezeichnet im Rahmen dieser Erfindung ein Polyurethan, dessen freie endständige Isocyanatgruppen mit einem nukleophil funktionalisierten (Meth)acrylatsäureester umgesetzt wurden. Dabei reagieren die Isocyanatgruppen mit der nukleophilen Gruppe des nukleophil funktionalisierten (Meth)acrylsäureesters, z.B. Hydroxy-, Amino- oder Mercaptogruppen, und es werden endständige, ethylenisch ungesättigte Funktionalitäten gebildet, die von (Meth)acrylaten abgeleitet sind. Der Ausdruck (Meth)acrylsäure bezeichnet hierin Methacrylsäure, Acrylsäure sowie Mischungen dieser Säuren. Weil die nukleophil funktionalisierten (Meth)acrylsäureester mit den freien Isocyanatgruppen des Polyurethans reagieren, diese also "verkappen", werden sie auch als "Capping-Reagenzien" oder "Verkappungsreagenzien" bezeichnet.

Unter dem Begriff "Reaktivverdünner" ist erfindungsgemäß eine Substanz zu verstehen, die mindestens eine ethylenische Doppelbindung erhält. Der Reaktivverdünner erfüllt folgende Funktionen:
1) Der Reaktivverdünner dient als flüssiges Reaktionsmedium für die Reaktion von Polyisocyanat mit mindestens einem Polyol und einem nukleophil funktionalisierten (Meth)acrylsäureester. An der genannten Reaktion nimmt der Reaktivverdünner nicht teil.
2) Der Reaktivverdünner ist nach Abschluss der unter 1) beschriebenen Reaktion das flüssige Dispergiermittel für die gebildeten funktionalisierten Polyurethan(meth)acrylatpartikel.
3) Der Reaktivverdünner ist in einem weiteren Schritt durch Polymerisation aushärtbar, wobei am Ende der Reaktion die zuvor gebildeten Polyurethan(meth)acrylatpartikel im ausgehärteten Reaktivverdünner eingebettet sind.

Das nach Abschluss des Schrittes 3) erhaltene Produkt wird im Rahmen dieser Erfindung auch als "ausgehärtete Dispersion" bezeichnet.

Die Einbettung der Polyurethan(meth)acrylatpartikel in der ausgehärteten Dispersion erfolgt durch Einpolymerisation der endständigen, ethylenisch ungesättigten Funktionalitäten der Partikel in die Makromoleküle der polymerisierten Matrix, wobei unter "polymerisierter Matrix" der polymerisierte Reaktivverdünner zu verstehen ist.

Im Rahmen der vorliegenden Erfindung unterliegt der Reaktivverdünner keinen relevanten Beschränkungen, mit der Ausnahme, dass er möglichst keine gegenüber Polyisocyanaten reaktiven funktionellen Gruppen aufweisen sollte. Geeignete Reaktivverdünner sind beispielsweise in der DE 10 2005 035 235 A1 in [0031] aufgeführt.

Im Rahmen der vorliegenden Erfindung hat es sich als günstig erwiesen, wenn der Reaktivverdünner ein polyfunktionelles (Meth)acrylat umfasst. Bevorzugt ist es, wenn es sich bei diesem polyfunktionellen Methacrylat um ein difunktionelles (Meth)acrylat handelt. Besonders geeignete Di(meth)acrylate sind in diesem Zusammenhang die Di(meth)acrylate des Propandiols, Butandiols, Hexandiols, Octandiols, Nonandiols, Dekandiols und Eikosandiols. Weitere geeignete difunktionelle (Meth)acrylate sind das Di(meth)acrylat des Ethylenglykols, Diethylenglykols, Triethylenglykols, Tetraethylenglykols, Dodekaethylenglykols, Tetradekaethylenglykols, Propylenglykols, Dipropylenglykols und Tetradekapropylenglykols sowie Glycerindi(meth)acrylat, 2,2'-Bis[p-(γ-methacryloxy-β-hydroxypropoxy)phenylpropan] oder bis-GMA, Bispenol A-Dimethacrylat, Neopentylglykoldi(meth)acrylat, 2,2'-Di(4-methacryloxypolyethoxyphenyl)propan mit 2 bis 10 Ethoxygruppen pro Molekül und 1,2-bis(3-methacryloxy-2-hydroxypropoxy)butan. Geeignete tri- oder mehrfach funktionelle (Meth)acrylate sind beispielsweise das Trimethylolpropantri(meth)acrylat und das Pentaerythritoltetra(meth)acrylat.

Als Reaktivverdünner können auch polare Monomere, beispielsweise solche mit Hydroxylgruppen, zur Verbesserung der Haftung eingesetzt werden. Dabei ist jedoch zu berücksichtigen, dass Monomere, die beispielsweise Hydroxylgruppen enthalten, mit Isocyanaten Reaktionen eingehen können. Daher können solche Monomere der Dispersion erst nach dem Polyadditionsschritt zugefügt werden. Zweckmäßig begrenzt man die Menge solch polarer Monomere, um die Empfindlichkeit gegenüber Wasserquellung nicht unnötig zu erhöhen. Besonders bevorzugt werden polare, insbesondere Hydroxylgruppen-haltige Monomere, die nicht kovalent an die Polyurethan(meth)acrylatpartikel gebunden und somit in ihrer Funktion von den nukleophil funktionalisierten (Meth)acrylsäureestern zu unterscheiden sind, in Mengen von maximal 0,1 bis 20 Gew.-%, bezogen auf das Gesamtgewicht des Reaktivverdünners, eingesetzt. Wie vorstehend erläutert ist es jedoch bevorzugt, wenn in der erfindungsgemäßen Lackzusammensetzungen keine solchen Monomere als Bestandteile des Reaktivverdünners enthalten sind.

Im Rahmen der vorliegenden Erfindung ist es zweckmäßig, wenn der Anteil der polyfunktionellen (Meth)acrylate mindestens 40 Gew.-%, vorzugsweise mindestens 50 Gew.-% und, weiter bevorzugt, mindestens 70 Gew.-% und am meisten bevorzugt mindestens 90 Gew.-%, bezogen auf das Gewicht des Reaktivverdünners, beträgt. In einer bevorzugten Ausführungsform besteht der Reaktivverdünner ausschließlich aus polyfunktionellen (Meth)acrylaten, besonders bevorzugt ausschließlich aus difunktionellen (Meth)acrylaten.

Ein Reaktivverdünner auf Basis von (Meth)acrylaten, kann des Weiteren Comonomere enthalten, die mit (Meth)acrylaten copolymerisierbar sind. Zu diesen gehören unter anderem Vinylester, Vinylchlorid, Vinylidenchlorid, Vinylacetat, Styrol, substituierte Styrole mit einem Alkylsubstituenten in der Seitenkette, wie zum Beispiel α-Methylstyrol und α-Ethylstyrol, substituierte Styrole mit einem Alkylsubstituenten am Ring, wie beispielsweise Vinyltoluol und p-Methylstyrol, halogenierte Styrole, wie beispielsweise Monochlorstyrole, Dichlorstyrole, Tribromstyrole oder Tetrabromstyrole, Vinyl- und Isoprenylether, Maleinsäurederivate, wie beispielsweise Maleinsäureanhydrid, Methylmaleinsäureanhydrid, Maleinimid, Methylmaleinimid, Phenylmaleinimid und Cyclohexylmaleinimid, und Diene, wie beispielsweise 1,3-Butadien, Divinylbenzol, Diallylphthalat und 1,4-Butandioldivinylether.

Der Anteil der vorstehend genannten Comonomere ist auf 40 Gew.-% des Reaktivverdünners beschränkt, da andernfalls die mechanischen Eigenschaften der gehärteten Dispersion nachteilig beeinflusst werden können. Der Anteil der Vinylaromaten ist hierbei auf 30 Gew.-% des Reaktivverdünners begrenzt, da höhere Anteile zu einer Entmischung des Systems und somit zu einer Trübung führen können.

Der Reaktivverdünner ist dementsprechend besonders bevorzugt aus
- 0 bis 40 Gew.-Teilen monofunktionellem (Meth)acrylat,
- 0 bis 40 Gew.-Teilen Comonomer und
- 60 bis 100 Gew.-Teilen polyfunktionellem (Meth)acrylat aufgebaut.

Polyisocyanate bezeichnen im Rahmen der vorliegenden Erfindung niedermolekulare Verbindungen, die im Molekül zwei oder mehrere Isocyanat-Gruppen enthalten. Bevorzugt werden in der vorliegenden Erfindung Diisocyanate eingesetzt.

In bestimmten Ausführungsformen können zusätzlich auch Polyisocyanate mit drei oder mehr Isocyanat-Gruppen zugegeben werden. Durch Wahl des Anteils an Polyisocyanaten mit drei oder mehr Isocyanat-Gruppen lässt sich das Eigenschaftsspektrum von Reißdehnung und Reißfestigkeit einstellen. Je höher der Anteil an Verbindungen mit drei oder mehr Funktionalitäten ist, desto größer wird die Reißfestigkeit. Hierbei nimmt allerdings die Reißdehnung stark ab. Dementsprechend wurde festgestellt, dass der Anteil von Polyisocyanaten mit drei oder mehr Funktionalitäten nicht größer als 10 Gew.-%, bevorzugt nicht mehr als 5 Gew.-%, bezogen auf die Gesamtmasse an Polyisocyanaten, sein sollte.

Im Rahmen der vorliegenden Erfindung geeignete Polyisocyanate sind beispielsweise in [0046] der DE 10 2005 035 235 A1 genannt. Im Rahmen der vorliegenden Erfindung ist es jedoch bevorzugt, wenn das in die Polyurethan(meth)acrylatpartikel einzubeziehende Polyisocyanat ein aliphatisches Isocyanat, wie beispielsweise 4,4'- und 2,4'-Methylendicyclohexyldiisocyanat, Hexamethylendiisocyanat oder Isophorondiisocyanat (IPDI) ist. Ganz besonders bevorzugt ist das Polyisocyanat ein cycloaliphatisches Polyisocyanat, wie Isophorondiisocyanat.

Geeignete Polyisocyanate können beispielsweise auch durch Umsetzung von mehrwertigen Alkoholen mit Diisocyanaten oder durch die Polymerisation von Diisocyanaten erhalten werden. Des Weiteren sind auch Polyisocyanate einsetzbar, die unter Umsetzung von Hexamethylendiisocyanaten mit geringen Mengen an Wasser darstellbar sind. Diese Produkte enthalten Biuretgruppen.

Alle genannten Isocyanate können einzeln oder als Mischung eingesetzt werden.

Wie im Vorstehenden ausgeführt, wird das Isocyanat mit mindestens einem Polyol umgesetzt. Unter einem Polyol versteht man im Rahmen der vorliegenden Erfindung eine Verbindung mit mindestens zwei Hydroxyfunktionalitäten. Das Polyol kann ein einheitliches Molekulargewicht besitzen oder eine statistische Verteilung des Molekulargewichts.

Das Polyol ist bevorzugt ein hochmolekulargewichtiges Polyol mit statistischer Molmassenverteilung. In diesem Sinne ist unter einem "hochmolekulargewichtigen Polyol" im Rahmen der vorliegenden Erfindung ein Polyol mit zwei oder mehreren Hydroxygruppen zu verstehen, wobei das Gewichtsmittel des Molekulargewichts des hochmolekulargewichtigen Polyols im Bereich von >500 bis etwa 20.000 g/mol liegt. Bevorzugt liegt es im Bereich von >500 bis 15.000 g/mol, zweckmäßig im Bereich von >500 bis 10.000 g/mol und ganz besonders bevorzugt im Bereich von >500 bis 5.000 g/mol, gemessen mit Gelpermeationschromatographie (GPC).

Beispielhaft für hochmolekulargewichtige Polyole sind die Polyetherpolyole. Ein Beispiel von Polyetherpolyolen sind Polyalkylenetherpolyole der Strukturformel 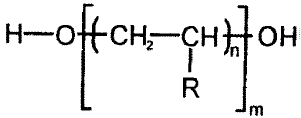 worin der Substituent R für Wasserstoff oder eine niedere Alkylgruppe mit 1-5 Kohlenstoffatomen steht, einschließlich gemischte Substituenten, n typischerweise 0-6 ist und m 2 bis 100 oder auch höher sein kann. Umfasst sind die Poly(oxytetramethylen)glykole (= Polytetramethylenetherglykol = Polytetrahydrofuran), Poly(oxyethylen)glykole, Poly(oxy-1,2-propylen)glykole und die Reaktionsprodukte von Ethylenglykol mit einer Mischung von 1,2-Propylenoxid, Ethylenoxid und Alkylglycidylethern.

Ein besonders bevorzugtes Polyol ist Polytetrahydrofuran. Es ist beispielsweise von der Firma BASF unter den Handelsnamen ^{®}PTHF 650 oder ^{®}PTHF 2000 erhältlich. Ein im Rahmen der Erfindung ganz besonders bevorzugtes Polyol ist ^{®}PTHF 2000.

Polyetherpolyole, die mindestens drei Hydroxylfunktionalitäten aufweisen, können ebenfalls eingesetzt werden. Um mindestens drei Hydroxylfunktionalitäten zu erhalten, die mit Isocyanatgruppen reagieren können, können beispielsweise Alkohole als Startmoleküle eingesetzt werden, die mindestens drei Hydroxylgruppen aufweisen. Hierzu gehören unter anderem Glycerin, Trimethylolpropan, Erythrit, Pentaerythrit, Sorbit und Inosit, von denen Glycerin bevorzugt ist. Ein bevorzugtes trifunktionelles Polyol ist ein trifunktionelles Polypropylenetherpolyol aus Propylenoxid, Ethylenoxid und Glycerin. Ein solches Polyol wird unter dem Namen Baycoll^{®} BT 5035 von der Firma Bayer vertrieben.

Als hochmolekulargewichtige Polyole können ebenfalls Copolyesterdiole, d.h. lineare Copolyester mit endständigen primären Hydroxylgruppen, eingesetzt werden. Ihr gewichtsmittleres Molekulargewicht, bestimmt mit Hilfe von GPC, liegt vorzugsweise bei 3000-5000 g/mol. Sie sind erhältlich durch Veresterung einer organischen Polycarbonsäure oder eines Derivats davon mit organischen Polyolen und/oder einem Epoxid. Im Allgemeinen sind die Polycarbonsäuren und Polyole aliphatische oder aromatische dibasische Säuren und Diole.

Als Diol in dem Copolyesterdiol werden vorzugsweise Alkylenglykole, wie Ethylenglykol, Neopentylglykol, oder auch Glykole wie Bisphenol A, Cyclohexandiol, Cyclohexandimethanol, von Caprolacton abgeleitete Diole, z.B. das Reaktionsprodukt von ε-Caprolacton und Ethylenglykol, Hydroxy-alkylierte Bisphenole, Polyetherglykole, wie Poly(oxytetramethylen)glykol und dergleichen eingesetzt. Polyole höherer Funktionalität können ebenso eingesetzt werden. Sie umfassen beispielsweise Trimethylolpropan, Trimethylolethan, Pentaerythrit, und höhermolekulargewichtige Polyole, wie diejenigen, die durch Oxyalkylierung niedermolekularer Polyole hergestellt sind.

Als Säurekomponente in dem Copolyesterdiol werden vorzugsweise monomere Carbonsäuren oder -anhydride mit 2 bis 36 Kohlenstoffatomen pro Molekül eingesetzt. Einsetzbare Säuren sind z.B. Phthalsäure, Isophthalsäure, Terephthalsäure, Tetrahydrophthalsäure, Decandisäure, Dodecandisäure. Die Polyester können geringe Mengen monobasischer Säuren enthalten, wie z.B. Benzoesäure, Stearinsäure, Essigsäure und Ölsäure. Ebenso einsetzbar sind höhere Polycarbonsäuren, wie Trimellithsäure.

Erfindungsgemäß bevorzugte mittellange Copolyesterdiole werden von der Firma Degussa unter dem Markennamen DYNACOLL^{®} 7380 und DYNACOLL^{®} 7390 vertrieben.

Ebenfalls bevorzugt im Rahmen der vorliegenden Erfindung sind Copolyester mit einem Molekulargewicht Mw, bestimmt mit GPC, von etwa 5500 und einer Hydroxylzahl von 18 bis 24. Ein entsprechendes Polymer ist beispielsweise von der Firma Evonik unter dem Handelsnamen DYNACOLL^{®} 7250 erhältlich.

In einer besonders bevorzugten Ausführungsform wird der Reaktionsmischung zur Bildung der Polyurethan(meth)acrylatpartikel zusätzlich zu einem hochmolekulargewichtigen Polyol auch ein niedermolekulargewichtiges Polyol zugesetzt. Demzufolge sind in einer hoch bevorzugten Ausführungsform Polyurethan(meth)acrylatpartikel dadurch erhältlich, dass man ein Polyisocyanat mit einem hochmolekulargewichtigen Polyol, einem niedermolekulargewichtigen Polyol und einem Hydroxyalkyl(meth)acrylsäureester in dem Reaktivverdünner umsetzt.

Unter einem "niedermolekulargewichtigen Polyol" versteht man erfindungsgemäß eine Verbindung, die zwei oder mehr Hydroxyfunktionalitäten und eine Molmasse von 50-500 g/mol, vorzugsweise 50-250 g/mol, besitzt. Das Molekulargewicht kann einheitlich sein, oder es kann - im Falle eines Polymerisationsprodukts - statistisch verteilt sein, wobei in letzterem Fall unter dem Molekulargewicht das Gewichtsmittel des Molekulargewichts zu verstehen ist.

Bevorzugt als niedermolekulargewichtiges Polyol ist eines mit einheitlichem Molekulargewicht, wobei die aliphatischen Diole mit 2 bis 18 Kohlenstoffatomen, wie z.B. Ethylenglykol, 1,2-Propandiol, 1,3 Propandiol, 1,2-Butandiol, 1,4-Butandiol, 1,2-Hexandiol und 1,6-Hexandiol, und die cycloaliphatischen Polyole, wie 1,2-Cyclohexandiol und Cyclohexandimethanol, besonders bevorzugt sind. Ebenso einsetzbar sind die Polyole mit Ethergruppen, wie Diethylenglykol und Triethylenglykol und Dipropylenglykol. Beispielhaft für niedermolekulargewichtige Polyole mit mehr als zwei Hydroxygruppen sind Trimethylolmethan, Trimethylolethan, Trimethylolpropan, Glycerin und Pentaerythrit. Am meisten bevorzugt werden als niedermolekulargewichtige Polyole 1,4-Butandiol und 1,3-Propandiol eingesetzt.

Es ist auch möglich, niedermolekulargewichtige Polyole mit einer statistischen Verteilung des Molekulargewichts einzusetzen. Als niedermolekulargewichtiges Polyol mit statistischer Molekulargewichtsverteilung kann prinzipiell jedes Polyol eingesetzt werden, das aus den gleichen monomeren Einheiten aufgebaut ist, wie die zuvor beschriebenen hochmolekulargewichtigen Polyole, jedoch ein entsprechend geringeres Molekulargewicht, wie oben angegeben, besitzt. Dem Fachmann ist ohne Weiteres ersichtlich, dass das Gewichtsmittel des Molekulargewichts im Fall eines niedermolekulargewichtigen Polyols mit statistischer Molmassenverteilung vorwiegend in der Nähe der Obergrenze des zuvor definierten Bereichs von 50-500 g/mol liegen wird.

Das niedermolekulargewichtige Polyol mit einer statistischen Verteilung ist vorzugsweise ein trihydroxyfunktionelles Polyol, besonders bevorzugt ein trihydroxyfunktionelles Polyalkylenglykol, und am meisten bevorzugt ein trihydroxyfunktionelles Polypropylenglykol. Derartige trihydroxyfunktionelle Polyalkylenglykole weisen zweckmäßig eine KOH-Zahl im Bereich von 140 bis 600 und bevorzugt im Bereich von 360 bis 500 auf. Ein geeignetes trihydroxy-funktionelles Polyalkylenglykol ist beispielsweise als Desmophen 1380 BT von Bayer erhältlich.

Das Mol-Verhältnis der Hydroxygruppen der niedermolekulargewichtigen trihydroxy-funktionellen Polyalkylenglykole beträgt, bezogen auf die Gesamtmolmenge der Hydroxygruppen aus den hochmolekulargewichtigen Polyolen und den niedermolekulargewichtigen trihydroxyfunktionellen Polyalkylenglykolen, vorzugsweise 2% bis 30% und besonders bevorzugt 4 bis 20%.

Im Rahmen der Erfindung ist es bevorzugt, wenn das in die Polyurethan(meth)-acrylatpartikel einzubeziehende Polyol mindestens ein dihydroxyfunktionelles und mindestens ein trihydroxyfunktionelles Polyol umfasst. Für das trihydroxyfunktionelle Polyol ist es wiederum bevorzugt, wenn dieses ein Polyalkylenglykol, bevorzugt ein Polypropylenglykol, umfasst. Im Rahmen der vorliegenden Erfindung ist es ganz besonders bevorzugt, wenn das Polyol ein Polyetherdiol mit einem Gewichtsmittel des Molekulargewichts von > 500 bis 5000 g/mol und ein Polyethertriol mit einem Gewichtsmittel des Molekulargewichts von > 50 bis 500 g/mol umfasst, wobei die Mol-Menge der OH Gruppen aus dem Polyethertriol mit einem Gewichtsmittel des Molekulargewichts von > 50 bis 500 g/mol etwa 3 bis 25 %, bevorzugt etwa 5 bis 15 %, der Summe der Mol-Menge des Polyetherdiols mit einem Gewichtsmittel des Molekulargewichts von > 500 bis 5000 g/mol und des Polyethertriols mit einem Gewichtsmittel des Molekulargewichts von > 50 bis 500 g/mol ausmacht.

Besonders bevorzugte nukleophil funktionalisierte (Meth)acrylsäureester sind hydroxyfunktionale (Meth)acrylsäureester. Unter einem "hydroxyfunktionalen (Meth)acrylsäureester" ist erfindungsgemäß ein (Meth)acrylsäureester zu verstehen, der in dem vom Alkohol herrührenden Rest nach der Veresterung mit der (Meth)acrylsäure noch mindestens eine Hydroxyfunktionalität trägt. Anders gesagt, handelt es sich um den Ester aus einer (Meth)acrylsäure und einem Diol oder Polyol, wobei Diole bevorzugt sind.

Eine besonders bevorzugte Gruppe von "hydroxyfunktionalen (Meth)acrylsäureestern" sind die Hydroxyalkyl(meth)acrylsäureester. Erfindungsgemäß einsetzbare Hydroxyalkyl(meth)acrylsäureester sind Ester der (Meth)acrylsäure mit zweiwertigen, aliphatischen Alkoholen. Diese Verbindungen sind in der Fachwelt weithin bekannt. Sie können beispielsweise durch die Reaktion von (Meth)acrylsäure mit Oxiranen erhalten werden.

Zu den Oxiranverbindungen gehören unter anderem Ethylenoxid, Propylenoxid, 1,2-Butylenoxid und/oder 2,3-Butylenoxid, Cyclohexenoxid, Styroloxid, Epichlorhydrin und Glycidylester. Diese Verbindungen können sowohl einzeln als auch als Mischung verwendet werden.

Die Hydroxyalkyl(meth)acrylsäureester können auch Substituenten, wie beispielsweise Phenylreste oder Aminogruppen, enthalten.

Bevorzugte Hydroxyalkyl(meth)acrylsäureester sind unter anderem 1-Hydroxyethylacrylat, 1-Hydroxyethylmethacrylat, 2-Hydroxyethylacrylat (HEA), 2-Hydroxyethylmethacrylat (HEMA), 2-Hydroxypropylacrylat, 2-Hydroxypropylmethacrylat, 3-Hydroxypropylacrylat, 3-Hydroxypropylmethacrylat, 6-Hydroxyhexylacrylat und 6-Hydroxyhexylmethacrylat, 3-Phenoxy-2-hydroxypropylmethacrylat, Acrylsäure-(4-hydroxybutylester), Methacrylsäure(hydroxymethylamid), Caprolactonhydroxyethylmethacrylat und Caprolactonhydroxyethylacrylat. Hiervon sind die Hydroxyethylmethacrylate, die Hydroxyethylacrylate, 2-Hydroxypropylmethacrylat und 2-Hydroxypropylacrylat ganz besonders bevorzugt. Am meisten bevorzugt sind 2-Hydroxyethylmethacrylat und 2-Hydroxyethylacrylat.

Eine weitere bevorzugte Gruppe der hydroxyfunktionalen (Meth)acrylsäureester sind die Polyethermethacrylate. Hierunter sind Substanzen zu verstehen, die durch Veresterung einer (Meth)acrylsäure mit einem Polyetherpolyol, vorzugsweise einem Polyetherdiol, erhalten sind. Solche Polyetherpolyole wurden bereits weiter oben bei der Nennung bevorzugter Polyole aufgeführt. Bei den Polyethermethacrylaten enthält der Hydroxyalkylrest des Esters Polyoxyalkylengruppen, die sowohl linear als auch verzweigt sein können, wie beispielsweise Polyethylenoxid, Polypropylenoxid und Polytetramethylenoxid. Diese Gruppen weisen häufig zwischen 2 und 10 Oxyalkylen-Einheiten auf. Spezielle Beispiele sind Polyethoxymethacrylat, Polypropoxymethacrylat, Polyethylenoxid/Polytetramethylenoxidmethacrylat, Polyethylenoxid/Polypropylenoxidmethacrylat.

Die Menge des nukleophil funktionalisierten (Meth)acrylsäureesters wird so gewählt, dass freie Isocyanatgruppen, die nach der Polykondensation zwischen Polyisocyanat und Polyol noch vorhanden sind, vollständig umgesetzt werden. Um die optimale Menge an nukleophil funktionalisierten (Meth)acrylsäureestern zu bestimmen, kann nach der Polykondensation der Gehalt freier Isocyanatgruppen bestimmt werden. Die Bestimmung des Gehalts freier Isocyanatgruppen kann beispielsweise mit infrarotspektroskopischen Methoden oder durch Titration erfolgen.

Das Polyurethan(meth)acrylat, aus dem die Partikel der erfindungsgemäßen Dispersion aufgebaut sind, besitzt im Allgemein ein gewichtsmittleres Molekulargewicht von 3000 bis 600 000 g/Mol, vorzugsweise von 3000 bis 500 000 g/Mol, was mit Hilfe der GPC zu bestimmen ist.

Bei der erfindungsmäßen Dispersion haben die Polyurethan(meth)acrylatpartikel einen mittleren Durchmesser von weniger als 40 nm, wodurch die erwünschte Transparenz erzielt wird. Bevorzugt wird ein mittlerer Partikeldurchmesser von weniger als 20 nm erzielt, mehr bevorzugt von weniger 10 nm.

Die angegebenen Durchmesser können mittels Lichtstreuung bestimmt werden. Entsprechende Verfahren sind dem Fachmann ohne weiteres geläufig. Ein geeignetes Gerät zur Bestimmung der Partikelgröße ist beispielsweise der Nanosizer der Fa. Malvern.

Unter dem Feststoffgehalt ist im Rahmen der vorliegenden Erfindung das Gewicht der Polyurethan(meth)acrylatpartikel, bezogen auf das Gewicht der gesamten Dispersion, zu verstehen. In der erfindungsgemäßen Dispersion beträgt der Feststoffgehalt vorzugsweise mindestens 20 Gew.-%. Ebenso ist es bevorzugt, wenn der Feststoffgehalt 80 Gew.-% oder weniger beträgt. Besonders bevorzugt ist ein Feststoffgehalt von 30 bis 50 Gew.-% und am meisten bevorzugt 35 bis 45 Gew.-%, jeweils bezogen auf das Gesamtgewicht der Dispersion.

Als Initiator für die Polymerisation des Reaktivverdünners kann im Rahmen der vorliegenden Erfindung prinzipiell jeder Initiator eingesetzt werden, mit dem eine Polymerisation des Reaktivverdünners möglich ist. Beispiele für verwendbare Initiatoren sind beispielsweise Peroxide und Hydroxyperoxide, wie zum Beispiel Dibenzoylperoxid, Diacetylperoxid und t-Butylhydroperoxid. Eine weitere Klasse von Initiatoren sind wärmeaktivierbare Initiatoren, insbesondere Azoinitiatoren, wie Azobisisobutyronitril. Wenn als Initiator ein Peroxid eingesetzt wird, so kann dessen Zersetzung mit Hilfe von Promotoren bei niedrigen Temperaturen induziert werden. Ein besonders bevorzugter Promotor in diesem Zusammenhang ist das N,N-bis-(2-hydroxyethyl)-p-toluidin (DEPT).

Als Initiator wird im Rahmen der vorliegenden Erfindung vorzugsweise ein UVaktivierbarer Photoinitiator eingesetzt. Bei derartigen Photoinitiatoren wird in der Regel zwischen Photoinitiatoren des Norrish-Typs I und des Norrish-Typs II unterschieden. Im Rahmen der vorliegenden Erfindung besonders bevorzugte Photoinitiatoren sind solche des Norrish-Typs I. Beispiele für derartige Photoinitiatoren sind das 2-Hydroxy-2-methyl-1-phenyl-propan-1-on (unter dem Namen Darocure^{®} 1173 von Ciba erhältlich) oder das 1-Hydroxycyclohexylphenylketon, das in Mischung mit Benzophenon (1:1) als Irgacure^{®} 500 von Ciba erhältlich ist. Die Menge des zugesetzten Photoinitiators unterliegt keinen wesentlichen Beschränkungen, sollte jedoch 10 Gew.-%, bezogen auf das Gesamtgewicht der Lackzusammensetzung, nicht überschreiten, da sonst eine Beeinflussung der Eigenschaften der Lackzusammensetzung nicht ausgeschlossen werden kann. Bevorzugte Gehalte des Photoinitiators liegen im Bereich von etwa 1 bis 6 Gew.-%, und besonders bevorzugt bei etwa 2 bis 4,5 Gew.-%.

Neben den vorstehend geschilderten Bestandteilen kann die Lackzusammensetzung gemäß der vorliegenden Erfindung noch geeignete Additive, insbesondere in Form von Entschäumern, Lösungsmitteln und/oder Filmbildnern enthalten. Ein geeigneter Entschäumer ist beispielsweise Byk 141 von Byk. Entschäumer sind normalerweise bereits in geringen Mengen effektiv, so dass der Gehalt an Entschäumern in der erfindungsgemäßen Lackzusammensetzung 3% nicht übersteigen sollte. Bevorzugt ist in Bezug auf den Entschäumer ein Gehalt im Bereich von 0,5 bis 1 Gew.-%, bezogen auf das Gesamtgewicht der Lackzusammensetzung.

Weiterhin kann die Lackzusammensetzung ein Lösungsmittel, wie insbesondere Butylacetat, enthalten. Hinsichtlich der Menge des Lösungsmittels unterliegt die Lackzusammensetzung ebenfalls keinen wesentlichen Beschränkungen, es ist jedoch zweckmäßig, das Lösungsmittel in Mengen, die 50 Gew.-%, bezogen auf das Gesamtgewicht der Lackzusammensetzung, nicht übersteigen, einzusetzen. In einer Ausführungsform ist die erfindungsgemäße Lackzusammensetzung frei von Lösungsmitteln. In einer anderen Ausführungsform enthält die erfindungsgemäße Lackzusammensetzung 20 bis 50 Gew.-%, insbesondere 30 bis 50 Gew.-% Lösungsmittel, bevorzugt in Form von Butylacetat. Je nach Auftragsverfahren kann der Einsatz von organischen Lösemitteln gewünscht sein, damit die Verarbeitungsparameter wie z.B. Viskosität, Nass-/Trockenschichtdicke und Lackverlauf den Anwenderwünschen angepasst werden können. Die bevorzugten Auftragsverfahren sind z.B. Rakeln, Walzen, Gießen, Vakuumat-Verfahren, Tauchen, Trommeln, Spritzen (Becherpistole, Airless, Airmix).

Weiterhin kann es zweckmäßig sein, der erfindungsgemäßen Lackzusammensetzung Filmbildner zuzusetzen. Geeignete Filmbildner sind beispielsweise Cellulosederivate. Besonders geeignete Filmbildner sind Celluloseester, insbesondere das Celluloseacetobutyrat.

Weitere geeignete Filmbildner sind z.B. hochmolekulare, partiell hydrolysierte Polyvinylchloride/Vinylacetatharze (z.B. Mischpolymerisate der Marke UCAR™ VAGH der Fa. Dow Chemical Company).

Die Viskositäten der erfindungsgemäßen Lackzusammensetzungen liegen im Allgemeinen zwischen 50 und 1000 mPa.s, gemessen rheologisch mit einer Kegelplattengeometrie bei einer Scherrate von 100 s⁻¹ und T = 25 bis 26°C. Bevorzugt liegt die Viskosität zwischen 50 und 500 mPa.s, noch mehr bevorzugt bei etwa 80 bis 300 mPa.s, und am meisten bevorzugt bei etwa 100 bis 250 mPa.s. Der "Lackfachmann" spricht auch von der Auslaufzeit in Sekunden die mit einem Auslaufbecher nach DIN 53211 bestimmt wird. Nach der DIN 53211 ist nur ein Auslaufbecher mit einer Auslaufdüse von 4 mm Durchmesser genormt. Die erfindungsgemäßen Lackzusammensetzungen weisen im Allgemeinen Auslaufzeiten von ca. 25 - 250 s, bevorzugt zwischen 30 - 180 s auf.

Die Erfindung betrifft in einem weiteren Aspekt ein Herstellungsverfahren für die eingangs beschriebene Lackzusammensetzung. Bei diesem Verfahren setzt man in einem Rührkessel ein Polyisocyanat mit mindestens einem Polyol und einem nukleophil funktionalisierten (Meth)acrylsäureester in einem Reaktivverdünner um. Diese Bestandteile wurden zuvor eingehend beschrieben. Die erfindungsgemäße Lackzusammensetzung ist dann erhältlich, indem der Reaktionsmischung, vor oder nach Polymerisation des Polyisocyanats, ein Initiator zugegeben wird. Ein geeignetes Verfahren zur Herstellung von Polyurethan(meth)acrylatpartikeln ist beispielsweise in der DE 10 2005 035 235 A1 in [0098] bis [0112] beschrieben.

Ein weiterer Aspekt der vorliegenden Erfindung betrifft ein beschichtetes Substrat, das durch Aufbringen einer wie im Vorstehenden beschriebenen Lackzusammensetzung auf das Substrat und Aushärtung der Zusammensetzung auf dem Substrat erhältlich ist. Bei dem Substrat handelt es sich zweckmäßig um Glas, Metall, bevorzugt mit einer Oberfläche aus Aluminium, Zink oder Eisen, und Kunststoffe, bevorzugt aus PVC oder Polycarbonat. Wenn im Vorstehenden von Metallen, die eine Oberfläche aus Aluminium, Zink oder Eisen aufweisen, die Rede ist, heißt dies, dass die Oberfläche, mit Ausnahme von unvermeidlichen Oxydationsprodukten des Aluminiums, Zinks oder Eisens, im Wesentlichen aus elementarem Aluminium, Zink oder Eisen besteht.

Ein weiterer Aspekt der vorliegenden Erfindung betrifft ein Verfahren zur Herstellung eines beschichteten Substrats, umfassend das Aufbringen einer wie vorstehend beschriebenen Lackzusammensetzung auf ein Substrat und das Aushärten der Lackzusammensetzung auf dem Substrat. Es ist bevorzugt, wenn das Aushärten der Zusammensetzung unter Bestrahlung mit UV-Licht erfolgt, was impliziert, dass als Initiator ein UV-Licht-aktivierbarer Initiator eingesetzt wird.

Die erfindungsgemäße Lackzusammensetzung besitzt im ausgehärteten Zustand, wie zuvor erwähnt, nicht nur eine hohe Transparenz, sondern auch eine gute

Haftfestigkeit, insbesondere auf Substraten, wie Glas, Metallen oder Kunststoffen, sowie eine hohe Härte und Beständigkeit gegen Mikrokratzer.

Die Erfindung wird nachfolgend durch Beispiele verdeutlicht, wobei diese nicht als Beschränkung der erfinderischen Idee aufgefasst werden sollen.

### Beispiele

Herstellung einer Polyurethan/Reaktiverdünner-Dispersion (Lackbasis 1):

Ein Gemisch aus 140,76 g PTHF 2000, 7,49 g 1,4-Butandiol und 100,45 g Hexandioldiacrylat (HDDA) wurde über einen auf 60 °C temperierten Tropftrichter bei 60 °C zu einem Gemisch aus 58,29 g IPDI in 170,32 g HDDA in einem Glasreaktor zugetropft und bei einer Rührgeschwindigkeit von 14,9 m/s gerührt. Anschließend wurde der Katalysator (0,44 g Dibutylzinndilaurat) zum Reaktionsgemisch gegeben und 1 h lang bei einer Rührgeschwindigkeit von 14,9 m/s gerührt. Der erhaltenen Mischung wurde abschließend 22,18 g Hydroxyethylacrylat zugegeben und das Gemisch wurde auf 23 °C abgekühlt.

Die erhaltene Lackbasis-Zusammensetzung wurden für Haftfestigkeitsuntersuchungen zu einem Lack formuliert, dessen Zusammensetzung in der folgenden Tabelle 1 angegeben ist:

**Tabelle 1**

| Rohstoffe | Lack 1 | Vergleichslack 1 |
|---|---|---|
| Lackbasis 1 (40%ig in HDDA) | 96,00 | - |
| Desmolux 2740 (100%ig) | - | 38,40 |
| HDDA | - | 57,60 |
| Darocur 1173 | 4,00 | 4,00 |
| | 100 | 100 |
| Anteil UV-Harz auf 100% | 40 | 40 |
| Anteil HDDA auf 100% | 60 | 60 |

Die Haftfestigkeit von Lack 1 sowie einem Vergleichslack 1 auf Basis von Desmolux 2740 auf unterschiedlichen Substraten wurde gemäß DIN EN ISO 2409 (Kennwert ISO GT0 - GT5) untersucht. GT0 steht dabei für sehr gute Haftfestigkeit, GT5 für komplette Enthaftung/schlechte Haftfestigkeit. Die Ergebnisse dieser Untersuchungen sind in der folgenden Tabelle 2 wiedergegeben.

**Tabelle 2**

| Haftfestigkeit | Lack 1 | Vergleichslack 1 |
|---|---|---|
| Glas (30 µm) | GT 2 | GT 5 |
| Glas (100 µm) | GT 1-2 | GT 5 |
| Aluminiumblech (12 µm) | GT 4 | GT 5 |
| Verzinktes Blech (12 µm) | GT 3 | GT 4 |
| Stahlblech (12 µm) | GT 4 | GT 4-5 |
| PVG-Folie schwarz (30 µm) | GT 0 | GT 4-5 |
| PVG-Folie schwarz (100 µm) | GT 0 | GT 4-5 |
| Polycarbonatplatte schwarz (100 µm) BayerMaterialScience | GT 0 | GT 3-4 |

Von der Gesamtperformance (Haftfestigkeit) zeigt Lack 1 gegenüber dem Vergleichslack 1 deutlich bessere Resultate. So zeigt der erfindungsgemäße Lack 1 im Vergleich zum kommerziell erhältlichen Produkt auf Basis von Desmolux 2724 verbesserte Haftfestigkeiten auf allen untersuchten Substraten . Lack 1 zeigt insbesondere auf Polycarbonatplatten und PVC-Folien sehr hohe Haftfestigkeiten.

Von den Formulierungen Lack 1 und Vergleichslack 1 wurde weiterhin die Pendeldämpfung in Sekunden nach König (bestimmt gemäß in Anlehnung an DIN 53157 mit 100 µm Nassauftrag) bestimmt. Die Ergebnisse dieser Untersuchungen sind in der folgenden Tabelle 3 als Schwingdauer in Sekunden dargestellt:

**Tabelle 3**

| | Lack 1 | Vergleichslack 1 |
|---|---|---|
| Pendeldämpfung [s] | 89 | 102 |

In den Untersuchungen zeigt sich bei Lack 1 ein deutlich niedrigerer Pendeldämpfungswert als bei dem Vergleichslack 1.

Weiterhin wurde die Beständigkeit einer erfindungsgemäßen Lackformulierung gegen Mikroverkratzung bestimmt. Die untersuchten Formulierungen sind in der folgenden Tabelle 4 wiedergegeben.

**Tabelle 4**

| Rohstoffe | Lack 2 | Vergleichslack 2 |
|---|---|---|
| Lackbasis 1 (40%ig in HDDA) | 60,00 | - |
| Desmolux 2740 (100%ig) | - | 24,00 |
| Byk 141 (Entschäumer) | 0,63 | 0,63 |
| HDDA (Reaktivverdünner) | - | 36,00 |
| Butylacetat (Lösemittel) | 33,06 | 33,06 |
| CAB-381-0.5 (Filmbildner) | 3,65 | 3,65 |
| Darocure 1173 | 1,86 | 1,86 |
| Irgacure 500 | 0,80 | 0,80 |
| | 100 | 100 |

Für eine vergleichende Prüfung wurden Lack 2 und der Vergleichslack 2 auf Basis von Desmolux 2740 untersucht.

Im Folgenden wurde die Beständigkeit gegen Mikrokratzer gemäß der IHD-Werksnorm W-466 bestimmt. Diese Norm gilt für Möbeloberflächen und dient der einheitlichen Bestimmung der Widerstandsfähigkeit der obersten Lackschicht gegen Mikrokratzer. Die Prüfung erfolgte mit einem Mini-Martindale-Gerät. Die Prüfkörper wurden mit 5 Lissajous-Bewegungen (die Lissajous-Bewegung entspricht 16 Zyklen von definierten Reibtellerbewegungen nach dem Verfahren A und B gemäß IHD-Werksnorm 466) beansprucht. Als Reibmittel wurden die Scotch-Brite-Reibmaterialien 7447 (sehr fein) und 7448 (ultrafein) verwendet. Die Prüfung wurde mit einer Prüfkraft von 6 N nach dem Verfahren A (Auswertung durch die Bestimmung der Glanzänderung) durchgeführt. Die Untersuchungen lieferten die in Tabelle 5 dargestellten Ergebnisse.

**Tabelle 5:**

| Variante | Glanzänderung in % | Klassifizierung nach. Verfahren A |
|---|---|---|
| Lack 2 | 10,5 | 1 |
| Vergleichslack 2 | 6,3 | 1 |

Lack 2 und der Vergleichslack 2 auf Basis von Desmolux 2740 zeigen eine vergleichbar geringe Glanzänderung von 10,5% bzw. 6,3%.

## Patentansprüche

1. Lackzusammensetzung in Form einer nichtwässrigen transparenten Dispersion umfassend
- einen Reaktivverdünner
- Polyurethan(meth)acrylatpartikel, die dadurch erhältlich sind, dass man mindestens ein Polyisocyanat mit mindestens einem Polyol und mindestens einem nukleophil funktionalisierten (Meth)acrylsäureester in dem Reaktivverdünner zu Polyurethan(meth)acrylatpartikeln mit einem mittleren Durchmesser von weniger als 40 nm umsetzt, und
- einen Initiator.

2. Lackzusammensetzung nach Anspruch 1, **dadurch gekennzeichnet, dass** der Reaktivverdünner ein polyfunktionelles (Meth)Acrylat, bevorzugt ein difunktionelles (Meth)Acrylat umfasst.

3. Lackzusammensetzung nach Anspruch 1 oder 2, **dadurch gekennzeichnet, dass** das mindestens eine in die Polyurethan(meth)acrylatpartikel einzubeziehende Polyisocyanat ein aliphatisches Polyisocyanat, bevorzugt ein cycloaliphatisches Polyisocyanat umfasst.

4. Lackzusammensetzung nach einem der Ansprüche 1 bis 3, **dadurch gekennzeichnet, dass** das mindestens eine in die Polyurethan(meth) acrylatpartikel einzubeziehende Polyol mindestens ein dihydroxyfunktionelles und mindestens ein trihydroxyfunktionelles Polyol umfasst.

5. Lackzusammensetzung nach Anspruch 4, **dadurch gekennzeichnet, dass** das trihydroxyfunktionelle Polyol ein Polyalkylenglycol, bevorzugt ein Polypropylenglycol, umfasst.

6. Lackzusammensetzung nach einem der vorstehenden Ansprüche, **dadurch gekennzeichnet, dass** das mindestens eine Polyol ein Polyetherdiol mit einem Gewichtsmittel des Molekulargewichts von > 500 bis 5000 g/mol und ein Polyethertriol mit einem Gewichtsmittel des Molekulargewichts von > 50 bis 500 g/mol umfasst, wobei die Mol-Menge der OH Gruppen aus dem Polyethertriol mit einem Gewichtsmittel des Molekulargewichts von > 50 bis 500 g/mol etwa 3 bis 25 %, bevorzugt etwa 5 bis 15 %, der Summe der Mol-Menge des Polyetherdiols mit einem Gewichtsmittel des Molekulargewichts von > 500 bis 5000 g/mol und des Polyethertriols mit einem Gewichtsmittel des Molekulargewichts von > 50 bis 500 g/mol ausmacht.

7. Lackzusammensetzung nach einem der vorstehenden Ansprüche, **dadurch gekennzeichnet, dass** der Anteil der Polyurethan(meth)acrylatpartikel 30 bis 50 Gew.-%, bevorzugt 35 bis 45 Gew.-%, bezogen auf das Gesamtgewicht der Dispersion beträgt.

8. Lackzusammensetzung nach einem der vorstehenden Ansprüche, **dadurch gekennzeichnet, dass** der Initiator ein UV aktivierbarer Photoinitiator, insbesondere des Norrish-Typs I ist.

9. Lackzusammensetzung nach einem der vorstehenden Ansprüche, **dadurch gekennzeichnet, dass** die Zusammensetzung mindestens ein Additiv ausgewählt aus Entschäumern, Lösemitteln und Filmbildnern enthält.

10. Lackzusammensetzung nach Anspruch 9, **dadurch gekennzeichnet, dass** der Filmbildner ein Cellulosederivat, bevorzugt einen Celluloseester und besonders bevorzugt Celluloseacetobutyrat umfasst.

11. Lackzusammensetzung nach einem der vorstehenden Ansprüche, **dadurch gekennzeichnet, dass** die Zusammensetzung eine Viskosität im Bereich von 50 bis 500 mPas, bevorzugt 80 bis 300 mPas, und besonders bevorzugt 100 bis 250 mPas aufweist, wobei die Viskosität rheologisch mit einer Kegelplattengeometrie bei einer Scherrate von 100 s⁻¹ und T = 25 bis 26°C zu bestimmen ist.

12. Beschichtetes Substrat, erhältlich durch Aufbringen einer wie in einem der Ansprüche 1 bis 11 beschriebenen Lackzusammensetzung auf das Substrat und Aushärten der Zusammensetzung auf dem Substrat.

13. Beschichtetes Substrat, **dadurch gekennzeichnet, dass** das Substrat Glas, Metall, bevorzugt mit einer Oberfläche aus Aluminium, Zink oder Eisen, und Kunststoff, bevorzugt PVC oder Polycarbonat, umfasst.

14. Verfahren zur Herstellung eines beschichteten Substrats umfassend
- Aufbringen einer wie in einem der Ansprüche 1 bis 11 beschriebenen Lackzusammensetzung auf ein Substrat und
- Aushärten der Lackzusammensetzung auf dem Substrat.

15. Verfahren nach Anspruch 14, wobei das Aushärten der Zusammensetzung unter Bestrahlung mit UV-Licht erfolgt.
